# FASCICULE DE BREVET EUROPEEN

(11) **EP 2 420 397 B1**
(45) Date de publication et mention de la délivrance du brevet: **20.01.2016**
(21) Numéro de dépôt: 11176146.6
(22) Date de dépôt: 01.08.2011
(51) Int. Cl.: B60D 1/02, B62D 53/04, B62D 53/06

(54) **Dispositif d'accrochage pour l'accrochage d'une remorque à un véhicule**
Anhängervorrichtung zum Anhängen eines Anhängers an ein Fahrzeug
Coupling device for coupling a trailer to a vehicle

(30) Priorité: 16.08.2010 FR 1056615
(43) Date de publication de la demande: 22.02.2012
(73) Titulaire: LG Développement, 56150 Baud (FR)
(72) Inventeur: Le Goff, Jean-Philippe, 56150 Baud (FR)
(74) Mandataire: Novagraaf Technologies

(56) Documents cités:
- EP-A1- 1 445 126
- DE-A1- 2 552 386
- DE-U1- 8 025 882
- US-A- 2 452 785
- US-A- 3 528 684
- US-A1- 2005 082 787

## Description

La présente invention concerne un système d'attelage pour véhicule et plus particulièrement un dispositif d'accrochage destiné à équiper un véhicule routier de type utilitaire, afin de lui permettre de tracter une remorque équipée d'un dispositif d'accrochage complémentaire, ainsi qu'un véhicule équipé d'un tel dispositif d'accrochage, et un ensemble routier comprenant un véhicule tracteur équipé dudit dispositif d'accrochage et une remorque équipée d'un dispositif d'accrochage complémentaire, et en particulier un ensemble routier comprenant en outre un dispositif de guidage dit axial.

Tracter une remorque à l'aide d'un véhicule routier, par exemple de type utilitaire, nécessite l'installation d'un système d'attelage comprenant un dispositif d'accrochage fixé au véhicule, à l'arrière de son châssis, et un dispositif d'accrochage complémentaire fixé à l'avant de la remorque tractée. Ce système d'attelage reliant le véhicule tracteur et la remorque a pour fonction principale d'assurer une liaison longitudinale des deux véhicules tout en conservant une mobilité angulaire relative entre eux, tant dans le sens horizontal pour négocier les virages ou effectuer des manoeuvres, que dans le sens vertical pour compenser la non planéité de la surface d'évolution.

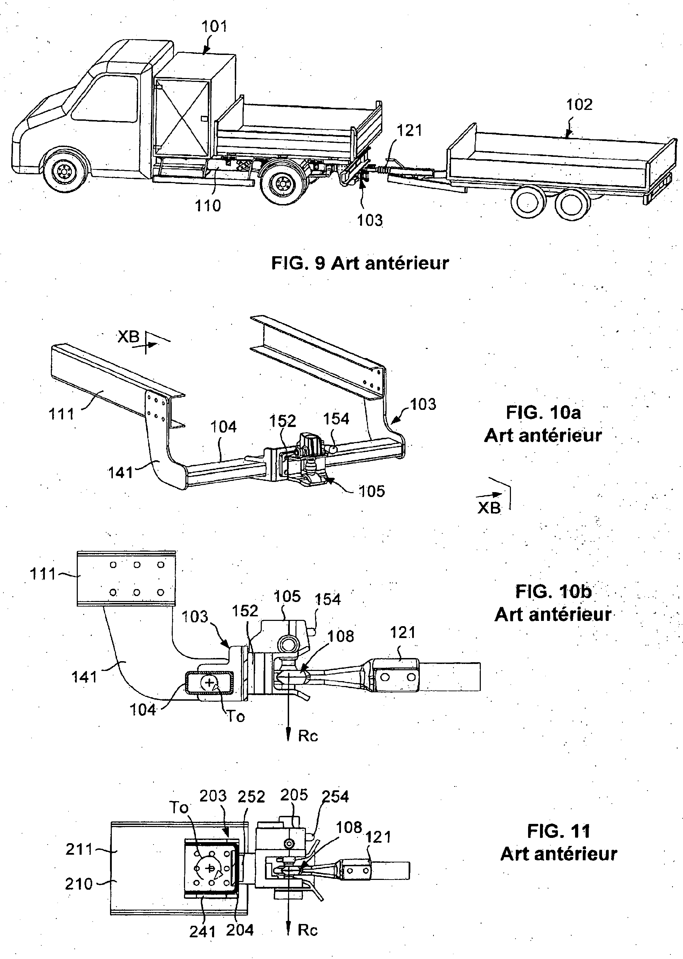

Les figures 9, 10a et 10b illustrent un exemple de système d'attelage dans le cas d'un véhicule 1 utilitaire dit léger, la figure 11 illustre un exemple de système d'attelage dans le cas d'un véhicule utilitaire de type poids lourd. Les dispositifs 103, 203 d'accrochage fixé au véhicule 101 peuvent comprendre un crochet 105, 205 d'attelage, de type chape à broche verticale, fixé solidement à l'extrémité arrière du châssis 110, 210 du véhicule. Il est destiné à recevoir le dispositif 108 d'accrochage complémentaire fixé à l'extrémité avant du timon 121 d'attelage de la remorque 102, et constitué d'un anneau d'accrochage.

Il est parfois impossible de réaliser une fixation directe de la chape à broche sur le châssis du véhicule. La pose d'une traverse 104, 204 boulonnée aux longerons 111, 211 du châssis, permet alors de la fixer. La fixation de cette traverse peut nécessiter l'utilisation de flasques 141 ou de renforts 241 de longerons placés dans le sens longitudinal. Grâce à plusieurs points de fixation, les flasques ou renforts du dispositif d'accrochage ont pour fonction de répartir sur le châssis les contraintes subies par le crochet d'attelage lorsque le véhicule tracte une remorque. L'ensemble formé par le crochet d'attelage et ses éléments de liaison jusqu'au châssis du véhicule constitue le dispositif d'accrochage, appelé également arbre d'attelage.

La traverse 104, 204, généralement métallique, possède une section ronde, ou rectangulaire, pleine ou creuse, par exemple une section creuse rectangulaire, tel qu'illustré sur la figure 10b. Cette section peut également être de type ouvert généralement en forme de U couché, les deux ailes du U étant dirigées vers l'avant du véhicule, la partie centrale du U, basculée verticalement, reçoit alors le crochet d'attelage sur sa surface dirigée vers l'arrière du véhicule, tel qu'illustré à la figure 11.

Dans tous les cas, le crochet d'attelage est fixé par la base de sa chape 152, 252 à la surface verticale de la traverse qui est la plus en arrière par rapport au véhicule, de façon à permettre la mobilité angulaire de la remorque par rapport au véhicule, c'est-à-dire l'inclinaison du timon de la remorque dans le plan horizontal jusqu'à un angle proche de 90° pour faciliter les manoeuvres. Cette position la plus en arrière et la plus dégagée possible est également nécessaire pour assurer, malgré le porte à faux arrière de la carrosserie, l'accessibilité à l'opérateur qui doit actionner manuellement le levier de verrouillage et déverrouillage 154, 254, disposé sur le côté de la chape à broche.

En position accrochée, le poids de la remorque se répartit principalement sur ses roues mais aussi sur son anneau d'accrochage. Le timon exerce un effort Rc, dit de report de charge, vertical, dirigé de haut en bas sur la chape d'attelage selon l'axe d'accrochage du crochet d'attelage, défini par l'axe de la broche. Le point d'action de l'effort correspondant à l'intersection entre ledit axe d'accrochage et le plan horizontal médian de l'anneau d'accrochage. Sous l'effet de cet effort exercé par le timon sur le crochet d'attelage, la traverse subit un couple de torsion To plus ou moins prononcé. Lors des phases de freinage ou d'accélération du véhicule, l'inertie de la remorque exerce une résistance qui par la liaison anneau / crochet induit également des efforts de flexion de la traverse soit vers l'avant soit vers l'arrière. Ces efforts de flexion qui s'additionnent aux efforts de torsion précités peuvent créer de fortes contraintes dans la traverse portant le crochet d'attelage. Les traverses actuellement commercialisées et homologuées, doivent donc être dimensionnées pour résister à ces contraintes avec la marge de sécurité qui convient.

Il est également connu, notamment par le document brevet EP 2 151 373, des remorques dites à « guidage axial », pour lesquelles le crochet d'attelage est généralement placé au-dessus des longerons du véhicule tracteur, en avant de son essieu arrière. Cette remorque a pour particularité d'être positionnée à cheval sur l'arrière du véhicule tracteur et d'être maintenue dans le même axe longitudinal que lui par l'action d'un dispositif de guidage axial. Cette nouvelle génération de remorques routières à guidage axial apparue récemment sur le marché offre de nombreux avantages aux utilisateurs tels que compacité, maniabilité, tenue de route, et charge utile supérieure pour un encombrement équivalent à un véhicule classique. Les véhicules qui tractent ce type de remorques à guidage axial peuvent être équipés d'un dispositif d'accrochage avec traverse de type connu.

Toutefois, pour atteler au même véhicule des remorques à guidage axial ayant des hauteurs de timon différentes et conserver en même temps leur assiette bien horizontale en particulier en charge, le crochet d'attelage doit être monté de manière réglable en hauteur sur le châssis du véhicule tracteur. Pour ce faire, une traverse de type connu peut être équipée en son milieu d'une platine épaisse fixée verticalement. La platine, qui s'étend vers le haut depuis la traverse, est percée de plusieurs rangées de trous correspondant à plusieurs hauteurs de fixation du crochet d'attelage.

Comme précédemment, le point d'action de l'effort de report de charge exercé par le timon sur le crochet d'attelage est décalé vers l'arrière par rapport à la traverse, créant un couple de torsion sur la traverse. En outre, plus la hauteur de fixation du crochet est importante, plus le point d'action de l'effort de report de charge, ainsi que les efforts de traction et de freinage horizontaux exercés par le timon lors des phases de traction et de freinage, s'éloigne de l'axe horizontal de la traverse, et plus la torsion de la traverse est importante. Dans le cas des remorques à guidage axial, la combinaison des efforts de torsion et de flexion agissant sur une traverse de type connu élève de façon très importante le niveau des contraintes qu'elle subit. Ceci nécessite de renforcer la traverse pour pouvoir passer avec succès les épreuves de résistance à la fatigue effectuées en vue de sa réception par les services en charge de son homologation routière. Une traverse ainsi renforcée devient complexe et coûteuse à fabriquer. Les problèmes de résistance à la rupture des liaisons des différentes pièces de renfort assemblées par boulonnage ou par soudure s'avèrent difficiles à résoudre. La traverse présente au final une grande rigidité qui a pour inconvénient de reporter l'ensemble des contraintes sur les éléments qui la relient aux longerons du châssis du véhicule déplaçant ainsi le problème de la résistance aux efforts sur les autres parties de l'arbre d'attelage et du châssis du véhicule.

D'autre part, le crochet d'attelage étant placé au centre du châssis, son levier de commande de verrouillage et déverrouillage et la commande de sécurité se révèlent inaccessible pour l'opérateur placé sur le côté du véhicule. Le crochet devant rester réglable en hauteur par rapport à la traverse, la mise en place de rallonges s'avère peu pratique. Les dispositifs d'accrochage proposés à ce jour se révèlent donc peu adaptés aux remorques à guidage axial. Le préambule de la revendication 1 est connu de document US 2,452,785.

Le but de la présente invention est de proposer une solution visant à pallier les inconvénients précités.

A cet effet la présente invention propose un dispositif d'accrochage selon la revendication 1.

Selon l'invention, l'organe d'accrochage est monté dans la traverse, de préférence de façon réglable selon les modèles, dans le sens longitudinal du véhicule, de sorte que l'axe d'accrochage de celui-ci passe sensiblement par l'axe de la traverse, qui lui est de préférence perpendiculaire. Dans la présente, l'expression « passe sensiblement par», couvre le cas d'un axe d'accrochage qui passe par l'axe longitudinal de la traverse, l'axe d'accrochage présente alors au moins un point d'intersection avec l'axe longitudinal de la traverse, ainsi que le cas d'un axe d'accrochage disposé à proximité immédiate de l'axe longitudinal de la traverse. La traverse équipée d'un tel organe d'accrochage selon l'invention permet de réduire ou supprimer les couples de torsion sur la traverse dus aux efforts de report de charge.

Selon une particularité, l'organe d'accrochage présente une portion active destinée à coopérer avec le dispositif d'accrochage complémentaire de la remorque, le plan médian de ladite portion active qui est perpendiculaire à l'axe d'accrochage passe sensiblement par l'axe longitudinal de la traverse. L'organe d'accrochage est monté dans la traverse, dans le sens vertical du véhicule, de sorte que le plan médian de ladite portion active passe sensiblement par l'axe longitudinal de la traverse. Comme précédemment, ledit plan médian passe par l'axe longitudinal de la traverse ou est disposé à proximité immédiate de ce dernier. Dans la position accrochée d'une remorque, le point d'action des forces statiques et dynamiques de la remorque agissant sur le véhicule, qui correspond à l'intersection dudit plan médian et de l'axe d'accrochage, est donc placé sur l'axe longitudinal de la traverse ou à proximité immédiate de celui-ci, ce qui permet supprimer ou de réduire au minimum les couples de torsion sur la traverse.

De préférence, l'intersection dudit plan médian et de l'axe d'accrochage, qui correspond au point d'action des forces statiques et dynamiques de la remorque agissant sur le véhicule, est placé sur l'axe longitudinal de la traverse.

La section transversale, comprenant au moins une première portion et deux deuxièmes portions telles que définies ci-dessus, peut avoir par exemple une forme globalement en U, en C ou demi-cercle, ou peut être fermée, par exemple rectangulaire, en particulier carrée, ou elliptique, en particulier circulaire. Lorsque la section transversale de la traverse est symétrique, par exemple dans le cas d'une section fermée circulaire ou rectangulaire, l'axe longitudinal de la traverse est l'axe longitudinal de symétrie de la traverse. Lorsque la traverse a une section transversale non symétrique, par exemple une section transversale ouverte en U ou en C, ou une section transversale fermée non symétrique, l'axe longitudinal de la traverse est l'axe longitudinal d'inertie de la traverse. De préférence, la traverse présente une section transversale fermée avec un axe longitudinal de symétrie.

Le dispositif d'accrochage selon l'invention est plus particulièrement adapté pour l'attelage de remorque à guidage axial. Dans le cas d'une remorque à guidage axial, l'organe d'attelage, tel qu'un crochet d'attelage de type chape à broche d'attelage doit être disposé le plus en avant possible par rapport à sa traverse de fixation de façon à optimiser la longueur carrossable de l'ensemble routier formé par le véhicule et sa remorque. En effet, l'espace existant entre l'arrière de la carrosserie du véhicule tracteur et l'avant de la carrosserie de la remorque, occupé par le dispositif d'attelage, doit être minimal. Le dispositif d'accrochage fixé sur la traverse selon l'invention permet de positionner l'organe d'accrochage le plus en avant possible sur le véhicule et donc de réduire cet espace.

Selon un mode de réalisation, la traverse a une section transversale fermée, par exemple globalement de forme circulaire ou rectangulaire, comprenant une première portion dite avant, des deuxièmes portions dites supérieure et inférieure, et une troisième portion dite arrière, la portion avant et la portion arrière étant reliées entre elles par les portions supérieure et inférieure, la paroi tubulaire de la traverse étant munie d'une ouverture débouchant sur ledit organe d'accrochage pour permettre le passage du dispositif d'accrochage complémentaire d'une remorque pour l'accrochage de cette dernière. De préférence, l'ouverture de la paroi arrière de la traverse est suffisamment large pour permettre l'inclinaison du timon de la remorque dans le plan horizontal afin d'assurer une mobilité minimale.

Selon un mode de réalisation, la traverse a une section transversale rectangulaire, de préférence de section sensiblement carrée, la paroi tubulaire de la traverse étant constituée d'une paroi avant et d'une paroi arrière reliées parallèlement entre elles par une paroi supérieure et une paroi inférieure, ledit organe d'accrochage étant fixé sur la surface interne de la paroi avant, la paroi arrière étant munie de ladite ouverture dite arrière permettant le passage du dispositif d'accrochage complémentaire.

En variante, la traverse a une section transversale de forme sensiblement circulaire, comprenant des portions avant, arrière, supérieure et inférieure en arc de cercle, l'organe d'accrochage étant monté au niveau de la portion avant, l'ouverture étant formée en vis-à-vis au niveau de la portion arrière.

Selon un mode de réalisation, ledit organe d'accrochage comprend une chape comportant un corps de section transversale en forme générale de U, avec une base, par laquelle ladite chape est montée contre la surface interne de la paroi avant de la traverse, et deux branches orientées vers la paroi arrière, et une broche d'axe d'accrochage apte à être montée, de préférence sensiblement verticalement, sur la chape dans une position verrouillée dans laquelle ladite broche s'étend d'une branche à l'autre de la chape, l'axe d'accrochage sensiblement vertical de la broche étant disposé à proximité de l'axe longitudinal de la traverse, ou passant par ce dernier.

Selon un mode de réalisation, la broche est montée mobile, de préférence sensiblement verticalement, sur une première branche et est apte à être manoeuvrée par un système de verrouillage/déverrouillage entre sa position verrouillée, dans laquelle la broche s'insère dans un trou de la deuxième branche, et une position déverrouillée dans laquelle la broche est écartée de la deuxième branche pour le retrait ou la mise en place du dispositif d'accrochage complémentaire, le système de verrouillage/déverrouillage comprenant de préférence un levier de manoeuvre, agissant sur la broche, et s'étendant à l'intérieur de la traverse, est actionnable, par exemple manuellement, depuis l'une des extrémités de la traverse.

Selon un mode de réalisation, le dispositif d'accrochage comprend un système de sécurité apte à bloquer la broche dans sa position verrouillée, ledit système de sécurité, s'étendant de préférence à l'intérieur de la traverse, et étant de préférence actionnable, par exemple manuellement, depuis l'une des extrémités de la traverse, le système de sécurité et le système de verrouillage/déverrouillage étant de préférence actionnables du même côté de la traverse.

Selon un mode de réalisation, le dispositif d'accrochage comprend des moyens de fixation pour la fixation de la traverse par ses portions d'extrémités sur les longerons d'un châssis de véhicule, lesdits moyens de fixation comprenant une ou plusieurs cales aptes à être intercalées entre la traverse et les longerons pour ajuster la position verticale de la traverse par rapport aux longerons. En variante, la traverse est montée entre les longerons par ses extrémités.

La présente invention a également pour objet un véhicule comprenant un châssis, comportant deux longerons, sur lequel sont montés au moins un essieu avant et un essieu arrière, caractérisé en ce qu'il est équipé d'un dispositif d'accrochage tel que défini précédemment, fixé par ses portions d'extrémité aux deux longerons du châssis.

La présente invention a également pour objet un ensemble routier caractérisé en ce qu'il comprend un véhicule tracteur équipé dudit dispositif d'accrochage selon l'invention, et une remorque équipée d'un dispositif d'accrochage complémentaire apte à coopérer avec le dispositif d'accrochage du véhicule tracteur pour accrocher la remorque au véhicule tracteur dans une position dite accrochée de la remorque. Le dispositif d'accrochage comprend de préférence un organe d'accrochage de type chape à broche, le dispositif d'accrochage complémentaire comprenant alors un anneau d'accrochage. En variante, l'organe d'accrochage est formé d'une boule d'attelage montée dans la traverse, l'axe vertical de symétrie de la boule d'attelage constituant l'axe d'accrochage, le timon de la remorque est alors équipé d'une coiffe. Le dispositif d'accrochage complémentaire présente un plan médian horizontal qui, en position accrochée de la remorque, est sensiblement confondu avec le plan médian de l'organe d'accrochage.

Comme décrit précédemment, le dispositif d'accrochage selon l'invention est particulièrement adapté à un ensemble routier comprenant une remorque dite à guidage axial. Selon un mode de réalisation, le dispositif d'accrochage est monté en avant de l'essieu arrière du véhicule tracteur, ledit ensemble comprenant en outre un dispositif dit de guidage axial comportant des moyens de guidage sur le véhicule tracteur aptes à coopérer dans la position accrochée de la remorque, avec des moyens de guidage complémentaires sur la remorque pour maintenir l'axe longitudinal médian de la remorque sensiblement dans le plan longitudinal vertical du véhicule tracteur lors de la conduite sur route, ladite remorque comprenant de préférence un timon coulissant portant en extrémité le dispositif d'accrochage complémentaire.

Selon un autre mode de réalisation, le dispositif d'accrochage est monté classiquement à l'arrière d'un véhicule, par exemple de type utilitaire, la traverse étant montée derrière l'essieu arrière du véhicule tracteur, et est par exemple fixée par ses extrémités, directement ou indirectement aux longerons du véhicule tracteur.

Le dispositif d'accrochage selon l'invention présente donc un certain nombre d'avantages tant pour sa fabrication industrielle en série à un coût compétitif que pour sa facilité et sa sécurité d'utilisation.

La traverse de préférence de forme tubulaire peut être facilement découpée et usinée par la technique du laser réduisant ainsi le temps de fabrication. Aucune soudure n'est nécessaire ce qui élimine la nécessité de contrôler la qualité des soudures en fin de chaine de production. Comparativement à une traverse classique et à résistance égale, le gain de poids est significatif grâce à un positionnement de la matière selon une enveloppe extérieure au dispositif d'accrochage qui optimise sa résistance à la flexion tant dans le sens longitudinal du véhicule que dans le sens vertical. Le positionnement au centre de la section transversale de la traverse, du point d'action des efforts de liaison entre le véhicule et sa remorque, supprime ou minimise toute déformation de la traverse par torsion. La suppression de ces contraintes de torsion qui, lorsqu'elles sont présentes, s'additionnent aux contraintes de flexion, fait que ce dispositif d'accrochage, selon l'invention, est bien adapté aux remorques à guidage axial pour lesquelles un réglage de hauteur peut s'avérer nécessaire, celui-ci entrainant d'importantes contraintes supplémentaires pour un dispositif d'accrochage de type connu. A l'exception du crochet d'attelage, l'arbre d'attelage est constitué de pièces de formes simples, découpées et pour certaines pliées, toutes assemblées par boulons ce qui facilite la fabrication et le montage. La hauteur de l'organe d'accrochage peut être facilement modifiée par ajout de cales de réglage assurant ainsi une parfaite assiette pour la remorque. La traverse est conçue pour recevoir différents modèles de crochets d'attelage homologués. La fixation du crochet d'attelage contre la paroi intérieure avant de la traverse optimise de façon idéale la compacité de l'ensemble routier dans le cas des remorques à guidage axial en permettant une longueur de carrossage maximale pour une longueur hors tout donnée de l'ensemble routier. Le déport sur le côté du véhicule de la commande de verrouillage du crochet d'attelage et de la commande du dispositif de sécurité, qui passent par l'intérieur de la traverse, facilite la manoeuvre pour l'opérateur.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- la figure 1 est une vue en perspective d'un ensemble routier selon l'invention comprenant une remorque accrochée à un véhicule tracteur de type utilitaire au moyen d'un système d'attelage ;
- la figure 2 est une vue agrandie en perspective du véhicule tracteur de la figure 1 ;
- la figure 3 est une vue agrandie en perspective du dispositif d'accrochage fixé sur les longerons du véhicule tracteur de la figure 2 ;
- la figure 4 est une vue en perspective agrandie de la traverse du dispositif d'accrochage de la figure 3 ;
- la figure 5 est une vue partielle agrandie du crochet d'attelage du dispositif d'accrochage de la figure 3, avec son système de verrouillage/déverrouillage et son système de sécurité ;
- la figure 6 est une vue partielle en coupe selon le plan de coupe VI-VI de la figure 3 ;
- la figure 7 est une vue en perspective du timon coulissant de la remorque de la figure 1, équipé du dispositif d'accrochage complémentaire ;
- la figure 8 est une vue analogue à celle de la figure 6, avec le timon coulissant de la remorque en position accrochée ;
- la figure 9 est une vue en perspective d'un ensemble routier comprenant un véhicule de type utilitaire, avec un système d'attelage selon l'art antérieur ;
- la figure 10A est une vue agrandie en perspective du dispositif d'accrochage du véhicule tracteur de la figure 9 de l'art antérieur, et la figure 10B est une vue en coupe selon le plan de coupe XB-XB de la figure 10A ; et,
- la figure 11 est une vue analogue à celle de la figure 10B, illustrant un exemple de système d'attelage dans le cas d'un véhicule de type poids lourds.

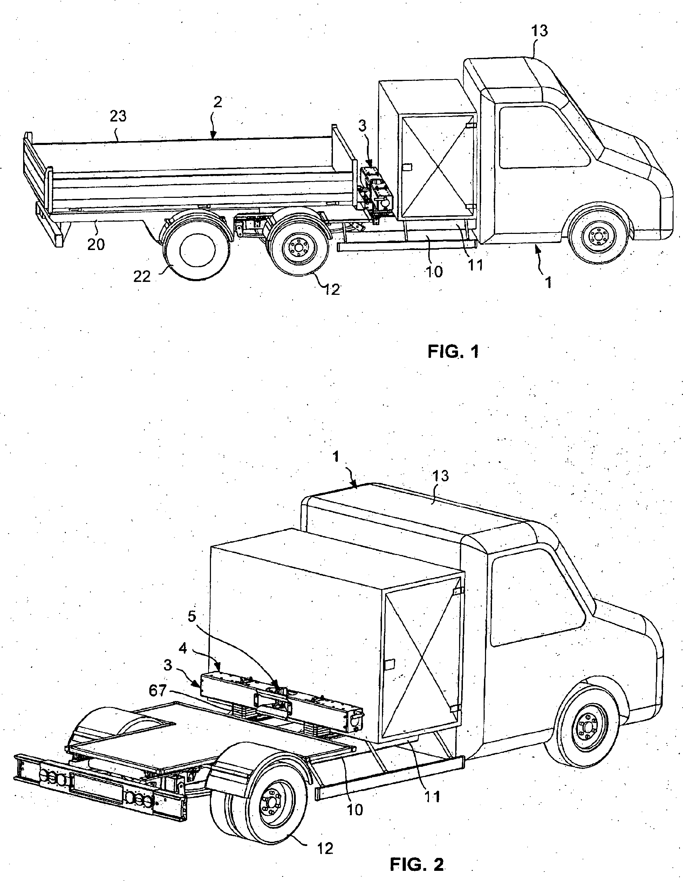

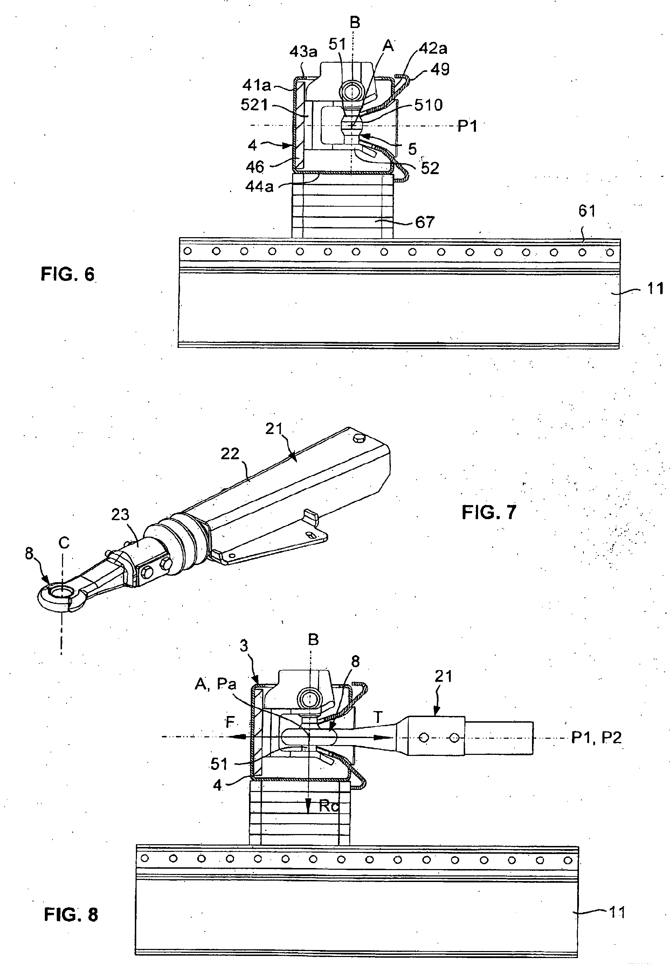

La figure 1 illustre un ensemble routier selon l'invention, comprenant un véhicule tracteur 1, une remorque 2, et un système d'attelage, ledit système d'attelage comprenant un dispositif d'accrochage 3 monté sur le véhicule tracteur, apte à coopérer avec un dispositif d'accrochage 8 complémentaire (Fig. 7) monté sur la remorque pour accrocher la remorque au véhicule tracteur dans une position dite accrochée de la remorque.

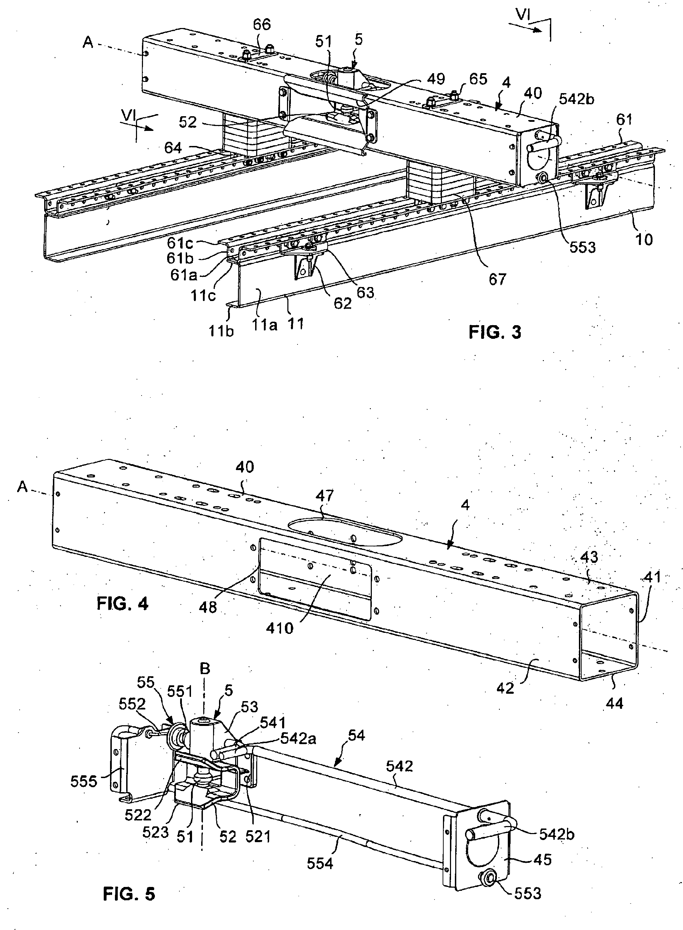

Le véhicule tracteur, de type utilitaire, comprend un châssis 10, sur lequel sont montés un essieu directionnel avant portant des roues avant et un essieu arrière portant des roues arrière 12. Le châssis porte en partie avant une cabine 13 et le système de motorisation du véhicule. Le châssis 10 présente un plan longitudinal de symétrie vertical et est formé par exemple de deux longerons 11, reliés parallèlement entre eux par plusieurs traverses (non représentées). En référence à la figure 3, chaque longeron a, par exemple, une section transversale en U couché, avec une base ou flanc 11a disposé verticalement et des ailes 11b, 11c, horizontales orientées vers l'intérieur.

En référence aux figures 2 et 3, le dispositif d'accrochage 3 du véhicule tracteur comprend une traverse 4, montée par ses portions d'extrémités sur les longerons 11 du châssis du véhicule tracteur, et un organe d'accrochage monté sur la traverse, et formé dans le présent mode de réalisation d'un crochet d'attelage 5 comprenant une broche 51 montée sur une chape 52, tel qu'illustré aux figures 5 et 6.

La remorque 2 comprend un châssis 20 équipé d'au moins un essieu portant des roues 22. Le châssis peut être équipé de différents types de carrosserie, par exemple d'une benne 23, basculante ou non basculante, tel qu'illustré sur la figure 1. La remorque comprend un timon d'attelage de type coulissant, dit timon coulissant 21, connu en soi, disposé selon le plan longitudinal de symétrie de la remorque, relié à un dispositif de freinage à inertie, connu en soi, pour commander les freins de la remorque. En référence à la figure 7, le timon coulissant 21 comprend un corps fixe 22 qui est fixé à l'avant du châssis 20 de la remorque, et une barre tubulaire mobile 23, qui est montée coulissante dans le corps fixe, et dont l'extrémité libre est équipée du dispositif d'accrochage complémentaire, formé ici d'un anneau 8 d'accrochage d'axe C. Le déplacement de la barre mobile commande, via un système de transmission, par exemple de type tringlerie ou hydraulique, l'activation des freins de la remorque.

Dans le mode de réalisation illustré à la figure 1, la remorque est de type à guidage axial. Le dispositif 3 d'accrochage est monté sur le châssis 10 du véhicule tracteur, au dessus et en amont de l'essieu arrière, et l'ensemble routier comprend en outre un dispositif de guidage axial, connu en soi. Pour plus de détails sur les remorques à guidage axial et les dispositifs de guidage axial, il est fait référence notamment à la demande de brevet européen EP 2 151 373 précitée, et aux demandes de brevet français n°0955856 et n° 0955858 déposées le 27 août 2009.

Selon l'invention, en référence aux figures 4, 5 et 6, la traverse 4 est formée d'un tube 40 métallique, d'axe longitudinal A, et de section transversale sensiblement carrée. La paroi tubulaire de la traverse est constituée d'une paroi avant 41 verticale et d'une paroi arrière 42 verticale qui sont reliées parallèlement entre elles par une paroi supérieure 43 horizontale et une paroi inférieure 44 horizontale. Suivant la figure 6, la section transversale de la traverse comporte ainsi, une portion 41a avant, une portion 42a arrière, une portion supérieure 43a et une portion inférieure 44a. Les extrémités ouvertes du tube sont de préférence fermées par des parois d'extrémité 45 fixées au tube par exemple au moyen de boulons.

Le crochet d'attelage 5, de préférence de type homologué, est monté à l'intérieur de la traverse. La chape 52 comporte un corps de section transversale en forme générale de U, avec une base 521 verticale, par laquelle ladite chape est fixée contre la surface interne 410 de la paroi avant 41, et deux branches 522, 523 orientées vers la paroi arrière. La broche 51 d'axe vertical B est montée mobile sensiblement verticalement sur la branche 522 supérieure de la chape, et peut être actionnée via un levier 541 de manoeuvre d'un système 54 de verrouillage/déverrouillage, entre une position déverrouillée dans laquelle l'extrémité inférieure de la broche est écartée de la branche 523 inférieure, et une position verrouillée dans laquelle la broche s'insère dans un trou de cette branche inférieure. La broche 51 présente une portion 510 active par laquelle la broche vient en contact avec l'anneau d'accrochage, cette portion active ayant un plan médian P1 horizontal.

L'intersection entre l'axe B de la broche, qui définit l'axe d'accrochage du crochet, et le plan médian P1 est positionné idéalement dans la traverse de façon qu'il soit positionné sur l'axe A longitudinal de la traverse tel qu'illustrée à la figure 6,ou le plus près possible de celui-ci, l'axe de la broche étant disposé à équidistance des deux extrémités de la traverse. La chape est centrée sensiblement dans la section transversale médiane de la traverse. Pour mieux répartir les efforts et diminuer les contraintes dans la traverse, une plaque 46 de renfort peut être disposée entre la traverse et le crochet 5. La plaque de renfort est par exemple soudée ou boulonnée contre la surface 410 intérieure de la paroi avant 41, la chape étant ensuite positionnée à plat par sa base 521 contre la plaque 46 de renfort et fixée par exemple au moyen de boulons. La paroi supérieure de la traverse peut être découpée dans sa partie centrale pour former une ouverture supérieure 47 permettant l'introduction du crochet 5 puis sa fixation. La paroi 41 avant est munie dans sa partie centrale de différents perçages permettant la fixation intérieure de différents modèles normalisés de crochets d'attelage de telle sorte que le point milieu d'action de l'organe d'accrochage complémentaire de la remorque en position accrochée soit toujours confondu avec l'axe longitudinal de la traverse ou le plus près possible de ce dernier. Une ou plusieurs cales peuvent être placées entre la chape et la traverse, en particulier entre la chape 52 et la plaque 46 de renfort, en fonction du modèle de crochet d'attelage pour régler le positionnement de l'axe B d'accrochage dans la traverse. Suivant les modèles de crochets, l'axe B d'accrochage peut passer idéalement par l'axe A longitudinal de la traverse, ou être légèrement décalé en avant ou en arrière par rapport à celui-ci.

Là paroi 42 arrière est découpée dans sa partie centrale, au niveau du crochet d'attelage, pour former une ouverture 48 arrière permettant le passage de l'anneau 8 d'accrochage du timon de la remorque. Au niveau de cette ouverture arrière, la paroi arrière est équipée d'un pavillon 49 de guidage permettant lors de l'accouplement de guider l'anneau d'accrochage vers les deux branches de la chape et entre celles-ci. Le pavillon est muni de pattes latérales pour sa fixation sur la paroi arrière par soudure et/ou boulonnage. Ce pavillon présente vers l'arrière un angle d'ouverture de ses parois intérieures dans le plan horizontal et dans le plan vertical. Cette forme évasée permet la mobilité du timon d'accrochage de la remorque de +/- 60° dans le plan horizontal et de +/-10° dans le plan vertical par rapport à la position neutre coaxiale du véhicule et de sa remorque attelée.

La broche 51 est montée coulissante dans un trou de la branche supérieure 522 de la chape et dans un boîtier 53 fixé sur ladite branche supérieure. Le levier 541 de manoeuvre du système 54 de verrouillage/déverrouillage, est en forme générale de U et est monté en rotation par sa base sur une paroi latérale du boitier, autour d'un axe de rotation perpendiculaire à l'axe de la broche, une première branche (non visible) placée dans le boitier passe dans un trou traversant de la broche, sa deuxième branche étant disposée à l'extérieur du boîtier apparaît sous la forme d'un levier coudé. Le déplacement du levier de sa position horizontale illustrée à la figure 5 vers une position verticale permet de manoeuvrer la broche de sa position verrouillée vers sa position déverrouillée. La broche est sollicitée élastiquement vers sa position de verrouillage par des moyens élastiques appropriés, placés dans le boîtier, et agissant sur la broche et/ou le levier.

Un système 55 de sécurité permet en outre de bloquer la broche en position verrouillée. Ce système de sécurité comprend un plot 551 de sécurité monté coulissant dans un trou de la paroi latérale du boitier, généralement à l'opposé du levier de manoeuvre, et sollicité élastiquement dans une position de blocage dans laquelle le plot est inséré dans un trou de la broche en position verrouillée.

Le levier 541 de manoeuvre et le plot 551 de sécurité sont connectés chacun à un système de rallonge, passant par l'intérieur de la traverse et débouchant à une extrémité de la traverse, pour permettre leur manoeuvre facile par un opérateur depuis un côté du véhicule.

Le système de verrouillage/déverrouillage comprend une tige 542 reliée par une extrémité recourbée 542a au levier de manoeuvre 541, de sorte que la tige soit disposée dans l'axe de la base du levier de manoeuvre, et passe par un palier monté sur l'une des parois 45 d'extrémité de la traverse. Sa deuxième extrémité recourbée est disposée à l'extérieur de la traverse et forme un levier 542b de manoeuvre secondaire pour manoeuvrer le levier 541 inaccessible car situé à l'intérieur de la traverse.

Pour le système de sécurité, le plot 551 est relié à la première extrémité d'un câble 552 de commande passant dans une gaine 554. Une extrémité de celle-ci est fixée sur la cloison 555 en face du plot 551, son autre extrémité étant fixée contre la paroi 45 d'une extrémité de la traverse. Une traction sur le bouton 553 fixé au câble 552 permet d'écarter le plot 551 de la broche 51 pour débloquer la broche et ainsi permettre la manoeuvre de celle-ci vers sa position déverrouillée via le levier 542b secondaire. La position plus ou moins écartée du bouton par rapport à la paroi 45 latérale permet d'indiquer à l'opérateur dans quelle position est le plot de sécurité. Le bouton sert ainsi également de témoin de verrouillage.

Des cloisons 555 transversales sont montées à l'intérieur de la traverse de part et d'autre du crochet, l'une d'entre elles sert de support à la gaine 554, l'autre (non visible) sert de support pour le montage rotatif de la tige 542. Ces parois transversales servent en outre à rigidifier la traverse.

Le dispositif d'accrochage comprend des moyens de fixation pour la fixation de la traverse 4 par ses portions d'extrémité sur les longerons 11 du châssis, sa paroi 44 inférieure en vis-à-vis des longerons, la paroi arrière de la traverse dirigée vers l'arrière du véhicule.

Dans le mode de réalisation illustré à la figure 3, la traverse est reliée au châssis par l'intermédiaire de longerons 61, dits longerons de renforts. Ces longerons de renfort ont une section en Ω inversé, comprenant une base 61a centrale, une paire d'ailes 61b latérales sensiblement parallèles et verticales et une paire d'ailettes 61c d'extrémité s'étendant perpendiculairement vers l'extérieur. Chaque longeron de renfort est fixé sur un longeron du châssis du véhicule, sa base 61a positionnée à plat contre la branche 11c supérieure d'un longeron. Cette fixation est par exemple réalisée par des boulons assemblant les pattes 62, 63 de fixation montées sur le longeron de renfort et le longeron de châssis. La fixation de la traverse à un longeron de renfort est réalisée au moyen d'un barreau (non visible) fixé dans le longeron de renfort, entre les ailes 61b, par exemple au moyen de boulons traversant horizontalement les ailes 61b. Le barreau est équipé d'une paire de vis 64 verticales. La traverse est positionnée sur le longeron de renfort en passant les vis 64 dans des perçages de la paroi 44 inférieure et de la paroi 43 supérieure. La fixation est réalisée en serrant des écrous 65 sur les extrémités des vis dépassant de la paroi supérieure. De préférence, un plat 66 de serrage est placé sur la paroi supérieure, et des douilles sont emmanchées sur les vis à l'intérieur de la traverse pour éviter le possible écrasement de celle-ci et garantir un meilleur serrage. La traverse peut être fixée directement sur les longerons de renfort, sa paroi 44 inférieure contre les ailettes 61c du longeron, son axe A disposé perpendiculairement au plan longitudinal de symétrie verticale du véhicule tracteur, l'axe B de la broche étant disposé sensiblement selon ledit plan. Comme illustré sur les figures, des cales 67 peuvent être intercalées entre la traverse 4 et les longerons 61 de renfort pour régler la position verticale de la traverse par rapport au châssis, en fonction du type de remorque. La paroi 43 supérieure et la paroi 44 inférieure comprennent plusieurs paires de perçages pour permettre la fixation de la traverse sur des châssis de véhicule ayant des écartements différents entre leurs longerons 11.

La traverse décrite ci-dessus peut être fabriquée facilement, de manière industrielle, à partir d'une seule pièce métallique tubulaire, percée et découpée par la technique du laser, sans nécessiter de soudure.

Cette absence de soudure dans la traverse a pour avantage d'éviter les contrôles fastidieux mais obligatoire de la qualité des soudures après fabrication pour les dispositifs bénéficiant d'une homologation.

Le câble de sécurité (non représenté) reliant le véhicule et sa remorque, qui est obligatoire pour pallier les cas de rupture d'attelage, ainsi qu'une prise électrique (non représentée) pour l'éclairage de la remorque, sont montés sur la traverse.

Pour l'accrochage de la remorque 2, le bouton 553 est tiré et le levier 542b secondaire est déplacé de l'horizontale vers la verticale afin d'amener la broche en position déverrouillée, puis l'anneau 8 du timon 21 de la remorque est amené entre les deux branches 522, 523 de la chape. En lâchant le levier secondaire, la broche 51 revient élastiquement dans sa position verrouillée, et le plot 551 revient élastiquement dans sa position de blocage. Si l'accrochage n'est pas correctement effectué, le mauvais positionnement du plot est repéré via la position du bouton. Dans la position accrochée de la remorque, tel qu'illustré à la figure 8, la broche 51 passe dans l'anneau 8 d'accrochage, le plan P2 médian horizontal de l'anneau qui est perpendiculaire à son axe C et le plan P1 médian horizontal de la broche étant confondus. Le point d'action Pa des efforts exercés par la remorque sur le dispositif d'accrochage correspond à l'intersection entre l'axe B d'accrochage et les plans P1, P2 médians horizontaux. La remorque exerce sur le dispositif d'accrochage
- un effort Rc de report de charge, vertical, dirigé vers le bas, dû au poids de la remorque partiellement reporté sur le dispositif d'accrochage,
- un effort T de traction, sensiblement horizontal et dirigé vers l'arrière, lors des phases de traction de la remorque et ayant pour origine la force d'inertie de celle-ci,
- un effort F de freinage, dirigé vers l'avant, lors des phases de freinage et ayant également pour origine la force d'inertie de la remorque jusqu'à ce que ses propres freins agissent grâce à l'action du timon coulissant qui les commande appelé timon de freinage à inertie.

Le point d'action Pa est idéalement confondu avec l'axe A de la traverse ou disposé le plus près possible de celui-ci (Fig 6). Ainsi, la traverse ne subit aucun ou très peu d'efforts de torsion particulièrement contraignants d'un point de vue résistance lorsqu'ils sont combinés à des efforts de flexion. La traverse subit donc principalement des efforts de flexion. Sa section transversale importante, puisqu'elle englobe le crochet, lui donne une résistance optimale à la flexion tant dans le sens vertical que longitudinal. Son moment quadratique élevé optimise l'utilisation de la matière qui la constitue. Par ailleurs, la fixation du crochet, contre la face intérieure de la paroi avant 41 de la traverse, assure une compacité optimale à l'ensemble routier formé par le véhicule tracteur et sa remorque.

## Revendications

1. Dispositif d'accrochage (3) destiné à être monté sur un véhicule (1), et apte à coopérer avec un dispositif d'accrochage (8) complémentaire d'une remorque (2) pour accrocher ladite remorque audit véhicule, ledit dispositif d'accrochage comprenant une traverse (4) de forme allongée ayant un axe (A) longitudinal, destinée à être montée sur le châssis (10) d'un véhicule par ses portions d'extrémité, et un organe (5) d'accrochage, définissant un axe (B) d'accrochage, monté sur ladite traverse, ladite traverse (4) présentant une section transversale comprenant au moins une première portion (41a) et deux deuxièmes portions (43a, 44a) latérales, chaque deuxième portion s'étendant depuis une extrémité de la première portion, les deux deuxièmes portions étant disposées en vis-à-vis et à distance l'une de l'autre, ledit organe d'accrochage étant disposé à l'intérieur de la traverse, entre les deuxièmes portions (43a, 44a) de la section transversale de la traverse, de sorte que l'axe (B) d'accrochage de l'organe d'accrochage (5) passe sensiblement par l'axe (A) longitudinal de la traverse (4), **caractérisé en ce que** la traverse (4) a une section transversale fermée, comprenant une première portion (41a) dite avant, des deuxièmes portions (43a, 44a) dites supérieure et inférieure, et une troisième portion (42a) dite arrière, la portion avant et la portion arrière étant reliées entre elles par les portions supérieure et inférieure, la paroi tubulaire de la traverse étant munie d'une ouverture (48) débouchant sur ledit organe (5) d'accrochage pour permettre le passage du dispositif (8) d'accrochage complémentaire d'une remorque pour l'accrochage de cette dernière.

2. Dispositif d'accrochage selon la revendication 1, **caractérisé en ce que** l'organe d'accrochage (5) présente une portion active (510) destinée à coopérer avec le dispositif d'accrochage complémentaire de la remorque, le plan médian (P1) de ladite portion active qui est perpendiculaire à l'axe (B) d'accrochage passe sensiblement par l'axe (A) longitudinal de la traverse.

3. Dispositif d'accrochage selon la revendication 2, **caractérisé en ce que** l'intersection (Pa) dudit plan médian (P1) de la portion active et de l'axe (B) d'accrochage est placé sur l'axe (A) longitudinal de la traverse (4).

4. Dispositif d'accrochage selon l'une des revendications 1 à 3, **caractérisé en ce que** la traverse (4) a une section transversale rectangulaire, la paroi tubulaire de la traverse étant constituée d'une paroi (41) avant et d'une paroi (42) arrière reliées parallèlement entre elles par une paroi (43) supérieure et une paroi (44) inférieure, ledit organe (5) d'accrochage étant fixé sur la surface (410) interne de la paroi (41) avant, la paroi (42) arrière étant munie de ladite ouverture (48) dite arrière permettant le passage du dispositif (8) d'accrochage complémentaire.

5. Dispositif d'accrochage selon la revendication 4, **caractérisé en ce que** ledit organe (5) d'accrochage comprend
- une chape (52) comportant un corps de section transversale en forme générale de U, avec une base (521), par laquelle ladite chape est montée contre la surface (410) interne de la paroi (41) avant de la traverse (4), et deux branches (522, 523) orientées vers la paroi (42) arrière,
- et une broche (51) d'axe (B) d'accrochage apte à être montée sur la chape (52) dans une position verrouillée dans laquelle ladite broche s'étend d'une branche à l'autre de la chape.

6. Dispositif d'accrochage selon la revendication 5, **caractérisé en ce que** la broche (51) est montée mobile sur une première branche (522) et est apte à être manoeuvré par un système (54) de verrouillage/déverrouillage entre sa position verrouillée, dans laquelle la broche s'insère dans un trou de la deuxième branche, et une position déverrouillée dans laquelle la broche est écartée de la deuxième branche (523), le système de verrouillage/déverrouillage comprenant un levier (541, 542) de manoeuvre agissant sur la broche et s'étendant à l'intérieur de la traverse (4), qui est actionnable depuis l'une des extrémités de la traverse (4).

7. Dispositif d'accrochage selon la revendication 5 ou 6, **caractérisé en ce qu'**il comprend un système (55) de sécurité apte à bloquer la broche (51) dans sa position verrouillée, ledit système de sécurité s'étendant à l'intérieur de la traverse (4) et étant actionnable depuis l'une des extrémités de la traverse (4).

8. Dispositif d'accrochage selon l'une des revendications 1 à 7, **caractérisé en ce qu'**il comprend des moyens de fixation pour la fixation de la traverse (4) par ses portions d'extrémités sur les longerons (11) d'un châssis (10) de véhicule (1), lesdits moyens de fixation comprenant une ou plusieurs cales (67) aptes à être intercalées entre la traverse et les longerons (11) pour ajuster la position verticale de la traverse par rapport aux longerons.

9. Véhicule (1) comprenant un châssis (10) comprenant deux longerons (11) et sur lequel sont montés au moins un essieu avant et un essieu arrière, **caractérisé en ce qu'**il est équipé d'un dispositif (3) d'accrochage selon l'une des revendications 1 à 8, fixé par ses portions d'extrémité aux deux longerons (11) du châssis.

10. Ensemble routier **caractérisé en ce qu'**il comprend un véhicule (1) tracteur selon la revendication 9, et une remorque (2) équipée d'un dispositif (8) d'accrochage complémentaire apte à coopérer avec le dispositif (3) d'accrochage du véhicule tracteur pour accrocher la remorque au véhicule tracteur.

11. Ensemble routier selon la revendication 10, **caractérisé en ce que** le dispositif (3) d'accrochage est monté en avant de l'essieu arrière du véhicule (1) tracteur, ledit ensemble comprenant en outre un dispositif dit de guidage axial comportant des moyens de guidage sur le véhicule tracteur aptes à coopérer dans la position accrochée de la remorque, avec des moyens de guidage complémentaires sur la remorque pour maintenir l'axe longitudinal médian de la remorque sensiblement dans le plan longitudinal vertical du véhicule tracteur lors de la conduite sur route.

## Patentansprüche

1. Anhängervorrichtung (3), die dazu bestimmt ist, an einem Fahrzeug (1) angebracht zu werden und die geeignet ist, mit einer dazu passenden Anhängervorrichtung (8) eines Anhängers (2) zusammenzuwirken, um den Anhänger an das Fahrzeug anzuhängen, wobei die Anhängervorrichtung einen Querträger (4) in länglicher Form mit einer Längsachse (A) aufweist, die dazu bestimmt ist, an ihren Endabschnitten an dem Rahmen (10) eines Fahrzeugs angebracht zu werden, und ein Anhängerelement (5), das eine Anhängerachse (B) definiert, die auf dem Querträger angebracht ist, wobei der Querträger (4) einen Querschnitt aufweist, der mindestens einen ersten Abschnitt (41a) und zwei zweite seitliche Abschnitte (43a, 44a) aufweist, wobei sich jeder zweite Abschnitt von einem Ende des ersten Abschnitts erstreckt, wobei die beiden zweiten Abschnitte gegenüber und in einem Abstand voneinander angeordnet sind, wobei das Anhängerelement im Innern des Querträgers zwischen den zweiten Abschnitten (43a, 44a) des Querschnitts des Querträgers angeordnet ist, so dass die Anhängerachse (B) des Anhängerelements (5) im Wesentlichen durch die Längsachse (A) des Querträgers (4) verläuft, **dadurch gekennzeichnet, dass** der Querträger (4) einen geschlossenen Querschnitt hat, der einen ersten, so genannten vorderen Abschnitt (41a), zweite, so genannte obere und untere Abschnitte (43a, 44a) und einen dritten, so genannten hinteren Abschnitt (42a) aufweist, wobei der vordere Abschnitt und der hintere Abschnitt durch die oberen und unteren Abschnitte miteinander verbunden sind, wobei die Rohrwandung des Querträgers mit einer Öffnung (48) versehen ist, die auf dem Anhängerelement (5) mündet, um den Durchgang der dazu passenden Anhängervorrichtung (8) eines Anhängers zum Anhängen des Letztgenannten zu ermöglichen.

2. Anhängervorrichtung nach Anspruch 1, **dadurch gekennzeichnet, dass** das Anhängerelement (5) einen aktiven Abschnitt (510) aufweist, der dazu bestimmt ist, mit der dazu passenden Anhängervorrichtung des Anhängers zusammenzuwirken, wobei die Mittelebene (P1) des aktiven Abschnitts, die senkrecht zur Anhängerachse (B) ist, im Wesentlichen durch die Längsachse (A) des Querträgers verläuft.

3. Anhängervorrichtung nach Anspruch 2, **dadurch gekennzeichnet, dass** sich der Schnittpunkt (Pa) der Mittelebene (P1) des aktiven Abschnitts und der Anhängerachse (B) auf der Längsachse (A) des Querträgers (4) befindet.

4. Anhängervorrichtung nach einem der Ansprüche 1 bis 3, **dadurch gekennzeichnet, dass** der Querträger (4) einen rechteckigen Querschnitt hat, wobei die Rohrwandung des Querträgers aus einer vorderen Wand (41) und einer hinteren Wand (42) gebildet ist, die durch eine obere Wand (43) und eine untere Wand (44) parallel miteinander verbunden sind, wobei das Anhängerelement (5) an der inneren Oberfläche (410) der vorderen Wand (41) befestigt ist, wobei die hintere Wand (42) mit der so genannten hinteren Öffnung (48) versehen ist, die den Durchgang der dazu passenden Anhängervorrichtung (8) ermöglicht.

5. Anhängervorrichtung nach Anspruch 4, **dadurch gekennzeichnet, dass** das Anhängerelement (5) Folgendes aufweist:
- ein Zugmaul (52), das einen Körper mit einem Querschnitt in der allgemeinen Form eines U, mit einer Basis (521), über die das Zugmaul gegen die innere Oberfläche (410) der vorderen Wand (41) des Querträgers (4) angebracht ist, und zwei Schenkel (522, 523) umfasst, die in Richtung der hinteren Wand (42) ausgerichtet sind,
- und einen Zapfen (51) der Anhängerachse (B), der geeignet ist, auf dem Zugmaul (52) in einer verriegelten Position angebracht zu werden, in der sich der Zapfen von einem Schenkel des Zugmauls zum anderen erstreckt.

6. Anhängervorrichtung nach Anspruch 5, **dadurch gekennzeichnet, dass** der Zapfen (51) beweglich auf einem ersten Schenkel (522) angebracht ist und geeignet ist, von einem Verriegelungs-/Entriegelungssystem (54) zwischen seiner verriegelten Position, in der der Zapfen in ein Loch des zweiten Schenkels eingeführt ist, und einer entriegelten Position, in der der Zapfen von dem zweiten Schenkel (523) beabstandet ist, verlagert zu werden, wobei das Verriegelungs-/Entriegelungssystem einen Verlagerungshebel (541, 542) aufweist, der auf den Zapfen einwirkt und sich im Innern des Querträgers (4) erstreckt, der von einem der Enden des Querträgers (4) aus betätigbar ist.

7. Anhängervorrichtung nach Anspruch 5 oder 6, **dadurch gekennzeichnet, dass** sie ein Sicherheitssystem (55) aufweist, das geeignet ist, den Zapfen (51) in seiner verriegelten Position zu blockieren, wobei sich das Sicherheitssystem im Innern des Querträgers (4) erstreckt und von einem der Enden des Querträgers (4) aus betätigbar ist.

8. Anhängervorrichtung nach einem der Ansprüche 1 bis 7, **dadurch gekennzeichnet, dass** sie Befestigungsmittel zur Befestigung des Querträgers (4) über seine Endabschnitte auf den Längsträgern (11) eines Rahmens (10) eines Fahrzeugs (1) aufweist, wobei die Befestigungsmittel eine oder mehrere Passstücke (67) aufweisen, die geeignet sind, zwischen dem Querträger und den Längsträgern (11) eingeschoben zu werden, um die vertikale Position des Querträgers in Bezug auf die Längsträger anzupassen.

9. Fahrzeug (1), aufweisend einen Rahmen (10), der zwei Längsträger (11) aufweist und an der mindestens eine Vorderachse und eine Hinterachse angebracht sind, **dadurch gekennzeichnet, dass** sie mit einer Anhängervorrichtung (3) nach einem der Ansprüche 1 bis 8 ausgestattet ist, die über ihre Endabschnitte an den beiden Längsträgern (11) des Rahmens befestigt ist.

10. Gespann, **dadurch gekennzeichnet, dass** es ein Zugfahrzeug (1) nach Anspruch 9 und einen Anhänger (2) aufweist, der mit einer dazu passenden Anhängervorrichtung (8) ausgestattet ist, die geeignet ist, mit der Anhängervorrichtung (3) des Zugfahrzeugs zusammenzuwirken, um den Anhänger an das Zugfahrzeug anzuhängen.

11. Gespann nach Anspruch 10, **dadurch gekennzeichnet, dass** die Anhängervorrichtung (3) vor der Hinterachse des Zugfahrzeugs (1) angebracht ist, wobei das Gespann ferner eine so genannte Achsführungsvorrichtung umfasst, die auf dem Zugfahrzeug Führungsmittel aufweist, die geeignet sind, in der angehängten Position des Anhängers mit dazu passenden Führungsmitteln auf dem Anhänger zusammenzuwirken, um die Längsmittelachse des Anhängers beim Fahren auf der Straße im Wesentlichen in der vertikalen Längsebene des Zugfahrzeugs zu halten.

## Claims

1. Coupling device (3) intended to be mounted on a vehicle (1) and able to cooperate with a complementary coupling device (8) of a trailer (2) in order to couple the said trailer to the said vehicle, the said coupling device comprising a crossbar (4) of elongate shape having a longitudinal axis (A) and intended to be mounted on the chassis (10) of a vehicle by its end portions, and a coupling member (5), defining a coupling axis (B), mounted on the said crossbar, the said crossbar (4) having a cross section comprising at least a first portion (41a) and two lateral second portions (43a, 44a), each second portion extending from an end of the first portion, the two second portions being arranged opposite to and at a distance from one another, the said coupling member being arranged inside the crossbar, between the second portions (43a, 44a) of the cross section of the crossbar, with the result that the coupling axis (B) of the coupling member (5) passes substantially through the longitudinal axis (A) of the crossbar (4), **characterized in that** the crossbar (4) has a closed cross section, comprising a first portion (41a), termed front portion, second portions (43a, 44a), termed upper and lower portions, and a third portion (42a), termed rear portion, the front portion and the rear portion being connected to one another by the upper and lower portions, the tubular wall of the crossbar being provided with an opening (48) which opens onto the said coupling member (5) in order to allow the passage of the complementary coupling device (8) of a trailer in order to couple this trailer.

2. Coupling device according to Claim 1, **characterized in that** the coupling member (5) has an active portion (510) intended to cooperate with the complementary coupling device of the trailer, and the median plane (P1) of the said active portion which is perpendicular to the coupling axis (B) passes substantially through the longitudinal axis (A) of the crossbar.

3. Coupling device according to Claim 2, **characterized in that** the intersection (Pa) of the said median plane (P1) of the active portion and of the coupling axis (B) is placed on the longitudinal axis (A) of the crossbar (4).

4. Coupling device according to one of Claims 1 to 3, **characterized in that** the crossbar (4) has a rectangular cross section, the tubular wall of the crossbar being formed by a front wall (41) and by a rear wall (42) connected parallel to one another by an upper wall (43) and a lower wall (44), the said coupling member (5) being fixed to the internal surface (410) of the front wall (41), the rear wall (42) being provided with the said opening (48), termed rear opening, allowing the passage of the complementary coupling device (8).

5. Coupling device according to Claim 4, **characterized in that** the said coupling member (5) comprises
- a clevis (52) having a body of generally U-shaped cross section with a base (521) by which the said clevis is mounted against the internal surface (410) of the front wall (41) of the crossbar (4), and two branches (522, 523) oriented towards the rear wall (42),
- and a pin (51) with the coupling axis (B) that is able to be mounted on the clevis (52) in a locked position in which the said pin extends from one branch of the clevis to the other.

6. Coupling device according to Claim 5, **characterized in that** the pin (51) is movably mounted on a first branch (522) and is able to be operated by a locking/unlocking system (54) between its locked position, in which the pin is inserted into a hole in the second branch, and an unlocked position in which the pin is moved away from the second branch (523), the locking/unlocking system comprising an operating lever (541, 542) which acts on the pin and extends inside the crossbar (4) and can be actuated from one of the ends of the crossbar (4).

7. Coupling device according to Claim 5 or 6, **characterized in that** it comprises a safety system (55) able to immobilize the pin (51) in its locked position, the said safety system extending inside the crossbar (4) and being able to be actuated from one of the ends of the crossbar (4).

8. Coupling device according to one of Claims 1 to 7, **characterized in that** it comprises fixing means for fixing the crossbar (4) by its end portions to the side rails (11) of a chassis (10) of a vehicle (1), the said fixing means comprising one or more shims (67) which are able to be inserted between the crossbar and the side rails (11) in order to adjust the vertical position of the crossbar with respect to the side rails.

9. Vehicle (1) comprising a chassis (10) comprising two side rails (11) and on which at least one front axle and one rear axle are mounted, **characterized in that** it is equipped with a coupling device (3) according to one of Claims 1 to 8 that is fixed by its end portions to the two side rails (11) of the chassis.

10. Vehicle combination **characterized in that** it comprises a tractor vehicle (1) according to Claim 9 and a trailer (2) equipped with a complementary coupling device (8) able to cooperate with the coupling device (3) of the tractor vehicle in order to couple the trailer to the tractor vehicle.

11. Vehicle combination according to Claim 10, **characterized in that** the coupling device (3) is mounted in front of the rear axle of the tractor vehicle (1), the said combination additionally comprising a device, termed axial guiding device, comprising guiding means on the tractor vehicle that are able to cooperate, in the coupling position of the trailer, with complementary guiding means on the trailer in order to maintain the median longitudinal axis of the trailer substantially in the vertical longitudinal plane of the tractor vehicle when driving on a road.
